# EUROPÄISCHE PATENTSCHRIFT

(11) **EP 3 881 663 B1**
(45) Veröffentlichungstag und Bekanntmachung des Hinweises auf die Patenterteilung: **19.10.2022**
(21) Anmeldenummer: 20204706.4
(22) Anmeldetag: 29.10.2020
(51) Int. Cl.: A01D 34/14, A01D 34/135

(54) **MÄHMESSERVORRICHTUNG**
MOWER BLADE DEVICE
DISPOSITIF À LAMES DE FAUCHAGE

(30) Priorität: 16.03.2020 CH 3152020
(43) Veröffentlichungstag der Anmeldung: 22.09.2021
(73) Patentinhaber: Wepfer Technics AG, 8450 Andelfingen (CH)
(72) Erfinder: Wepfer, Hans, 8471 Berg-Dägerlen (CH)
(74) Vertreter: Keller Schneider Patent- und Markenanwälte AG

(56) Entgegenhaltungen:
- CH-A- 504 151
- DE-C- 168 955
- DE-C- 480 496
- US-A- 102 835
- US-A- 816 614
- US-A- 1 046 530

## Beschreibung

### Technisches Gebiet

Die Erfindung betrifft eine Mähmesservorrichtung mit einem Doppelmesser-Schneidsystem, wobei das Doppelmesser-Schneidsystem ein oberes Schneidmesser und ein unteres Schneidmesser umfasst, welche mittels eines einseitigen Antriebs relativ zueinander bewegbar ausgebildet sind.

### Stand der Technik

Die Druckschrift DE19541898A1 betrifft ein Mulchmähschneidwerk, dessen hin- und herbewegtes Obermesser und dessen stehendes Untermesser mit etwa dreieckigen Schneidbereichen ausgestattet sind, wobei das Obermesser mittels über ihm angeordnete Messerhalter gelagert ist, und das Ober- und das Untermesser einstückig ausgebildet sind und das Obermesser im Bereich unter den Messerhaltern in Schneidwerks-Längsrichtung verlaufende Langlöcher aufweist, in die Führungsleisten der Messerhalter einragen.

Die Druckschrift DE2626073A1 betrifft einen Mähbalken mit einer Führung für ein oder mehrere angetriebene, hin- und herbewegte Messer. Derartige Mähbalken werden in der Regel seitlich am Schlepper angebaut. Sie finden jedoch auch für Heckmähwerke am Schlepper oder für Frontmähwerke am Mähdrescher Verwendung. Bei den bekannten Messerbalken sind die einzelnen Messerklingen auf einem Messerstab fest aufgenietet. Die Führung des Messerstabes erfolgt durch entsprechende Aussparungen in den sogenannten Fingern, die am Mähbalken fest angeordnet sind. Die Fingerkanten dienen als Gegenschneiden für die auf den Fingern aufliegenden Messerklingen. Ein auf der Oberseite des Mähbalkens angeordneter Messerhalter verhindert das Ausweichen der Messerklingen nach oben. Die Messerklingen bilden zusammen mit dem Messerstab eine Messereinheit, die an einem ihrer freien Enden mit einer Antriebsstange des Kurbeltriebes verbunden ist.

Die Druckschrift US 1,046,530 A bezieht sich auf Schneid-mechanismen für Mäher und hat zum Ziel, einen Mechanismus mit einfacher Struktur bereitzustellen. Die Teile sind so angeordnet, dass der Schneidvorgang leicht ausgeführt werden kann. Der Mechanismus umfasst innere und äußere Laufschienen, auf denen eine feinere Stange montiert ist. Führungen sind an der Fingerleiste und an der Innenkufe angebracht und erstrecken sich parallel zueinander quer zur Verzugslinie der Maschine. An der Fingerstange sind Schutzbleche mit einer besonderen Konfiguration angebracht, und eine Reihe verbundener Riegelplatten ist an den Schutzvorrichtungen angebracht und innerhalb der Klingenöffnungen darin angeordnet. Eine Messerstange ist so angeordnet, dass sie sich über die Reihe von Riegelplatten hin- und her bewegt und eine Reihe feststehender Klingen trägt. Ein Block ist lösbar mit dem inneren Ende der Längsstange verbunden, und ein Kopf ist schwenkbar mit dem Block verbunden. Mit dem Kopf ist die Lenkstockstange der Maschine verstellbar verbunden. Ein Hebel ist zwischen den oben erwähnten Führungen drehbar gelagert und kann über den Block nach unten geschwenkt werden, so dass sich der Block darunter hin- und her bewegen kann, und es sind Mittel vorgesehen, um das freie Ende des Hebels in seiner untersten Position zu halten.

Die Druckschrift US 816,614 A betrifft einen Kopf für Mähklingen, wobei der Hauptzweck der Erfindung darin besteht, Vorrichtungen dieser Klasse zu verbessern, indem man einen Kopf mit einem hohlen Teil vorsieht, in den der Schaft der Schnitter- oder Mähklinge leicht eingesetzt und befestigt werden kann. Im Falle eines Bruchs des Kopfes kann dieser leicht von der Klinge getrennt und durch einen anderen Kopf ähnlicher Bauart ersetzt werden kann, ohne auf die langwierigen Reparaturarbeiten zurückgreifen zu müssen. Der Kopf hat eine integrale Konstruktion und ist mit einer rechteckigen Bohrung versehen, die sich in Längsrichtung durch den unteren Teil des Kopfes vollständig von einem Ende zum anderen Ende des Kopfes erstreckt. Der Kopf umfasst einen im Querschnitt rechteckigen Messerträgerschaft, der in Längsrichtung und verstellbar in die Bohrung eingesetzt ist, und Stellschrauben, die von der Oberseite des Kopfes nach unten ragen und mit der Bohrung im unteren Teil des Kopfes in Verbindung stehen. Die Stellschrauben sind an gegenüberliegenden Enden des Kopfes angeordnet, um eine doppelte Befestigung für den Schaft zu schaffen und um den Schaft mit rotem Abstand zum Kopf zu verstellen.

Die Druckschrift DE 168 955 C betrifft eine Vorrichtung zur schnellen und gefahrlosen Auswechslung von Mähmaschinenmessern. Hierbei kann das Mähmaschinenmesser vollständig durch eine oder zwei Schrauben von einem hinter der Maschine stehenden Arbeiter schnell und gefahrlos entfernt werden. Die Vorrichtung zur schnellen und gefahrlosen Auswechslung von Mähmaschinenmessern umfasst eine das Messer tragende Schiene Die Schiene wird in einen sich in prismatischen Führungen bewegenden Kopf eingeschoben und durch Schrauben befestigt.

Der Nachteil dieser bekannten Mähmesservorrichtung besteht darin, dass die Antriebskräfte direkt auf das Messer wirken, das im ständigen Wechsel auf Druck und Zug beansprucht ist. Die Folge davon ist, dass die Messerklingen und der Messerstab relativ kräftig dimensioniert werden müssen, was umgekehrt die Masse der Schneidmesser erhöht. Bei Überlastung kommt es daher häufig zu Brüchen an der Verbindungsstelle zwischen Antriebsstange und Messer. Eine stärkere Dimensionierung der Messerteile ist wirtschaftlich nicht vertretbar, da es sich um Verschleißteile mit relativ kurzer Lebensdauer handelt.

Ein weiterer Nachteil ist, dass sowohl das Auswechseln des Schneidmessers als auch das Erneuern der Messerklingen zeitraubend und kostenaufwendig ist.

Ein zusätzlicher Nachteil im Stand der Technik ist, dass ein effizientes Schleifen der Messerklingen insbesondere im Bereich des Messerkopfes schwierig bis unmöglich ist.

Dies reduziert die Einsatzdauer der Schneidmesser und macht deren Instandhaltung aufwendig und teuer.

### Darstellung der Erfindung

Aufgabe der Erfindung ist es, ein besonders effizientes Konzept einer dem eingangs genannten technischen Gebiet zugehörenden Mähmesservorrichtung zu schaffen, welche eine einfache Handhabung und eine erhöhte Einsatzdauer ermöglicht.

Die Lösung der Aufgabe ist durch die Merkmale des Anspruchs 1 definiert. Die Erfindung betrifft eine Mähmesservorrichtung mit einem Doppelmesser-Schneidsystem, wobei das Doppelmesser-Schneidsystem ein oberes Schneidmesser und ein unteres Schneidmesser umfasst, welche mittels eines einseitigen Antriebs relativ zueinander bewegbar ausgebildet sind, wobei zumindest das obere Schneidmesser oder das untere Schneidmesser jeweils mehrere Klingenelemente umfasst, die über einen Messerrücken miteinander verbunden ausgebildet sind, und wobei die Klingenelemente und der Messerrücken als gemeinsames integrales Bauteil ausgebildet sind, und wobei die Mähmesservorrichtung einen auswechselbaren Messerkopf zum Einleiten einer Antriebsbewegung eines seitlichen Antriebs auf das Doppelmesser-Schneidsystem aufweist.

Aufgrund der integralen einstückigen Ausbildung der Klingenelemente mit dem Messerrücken, wird eine Auswechselbarkeit des oberen Schneidmessers und des unteren Schneidmessers deutlich vereinfacht. Zudem werden durch die einstückige Ausbildung die Masse und die Dicke des oberen Schneidmessers und des unteren Schneidmessers erheblich reduziert. Die reduzierte Masse ermöglicht hierbei eine Verschleissreduzierung, wodurch die Lebensdauer der Mähmesservorrichtung erhöht wird. Die reduzierte Dicke des oberen Schneidmessers und des unteren Schneidmessers verbessert das Abgleiten von Schnittgut im Betrieb der Mähmesservorrichtung, da sämtliche Kanten durch Materialaufdickung des Messerrückens, wie sie beispielsweise durch angenietete oder aufgeschweisste Klingenelemente entstehen, eliminiert werden.

Ein weiterer Vorteil ergibt sich dadurch, dass die integrale einstückige Ausbildung der Klingenelemente das Schleifen und Schärfen der einzelnen Klingenelemente verbessert. Materialaufdickungen des Messerrückens, wie sie durch angenietete oder aufgeschweisste Klingenelemente entstehen, erschweren die Zugänglichkeit zu den Klingenelementen, um diese regelmäßig zu schleifen und zu schärfen. Somit wird die Instandsetzung vereinfacht und die Handhabung verbessert.

Ein zusätzlicher Vorteil ergibt sich durch die Auswechselbarkeit des Messerkopfes. Zum Zweck des Austausches des oberen Schneidmessers oder des unteren Schneidmessers kann der Messerkopf vollständig entfernt werden. Dies vereinfacht den Aufwand beim Wechseln der Schneidmesser. Ein besonderer Vorteil ergibt sich erneut beim Schleifen der Klingenelemente. Durch das vollständige Entfernen des Messerkopfes wird die Zugänglichkeit zu den Klingenelementen, um diese zu schleifen und zu schärfen, erleichtert. Somit wird die Einsatzdauer erhöht und die Instandsetzung sowie die Handhabung verbessert. Des Weiteren ergeben sich dadurch Kosteneinsparungen.

Nach einer bevorzugten Ausführungsform weist der Messerkopf ein Eingreifelement auf, welches zum Eingreifen in eine korrespondierende Eingreifaufnahme im Messerrücken des oberen Schneidmessers oder des unteren Schneidmessers ausgebildet ist. Dadurch wird beispielsweise der technische Vorteil erreicht, dass die Krafteinleitung des Messerkopfes besonders einfach in das obere Schneidmesser oder das untere Schneidmesser erfolgen kann. Es sind somit keine zusätzlichen Mittel oder Bauteile zur Krafteinleitung notwendig, wodurch die Masse insgesamt und die Herstellungskosten reduziert werden können.

Gemäss einer weiteren Ausführungsform, umfasst das Eingreifelement zumindest zwei Eingreifvorsprünge. Dadurch wird einerseits der Vorteil erreicht, dass eine sehr einfache aber feste Zuordnung zwischen Messerkopf und Schneidmesser realisiert werden kann. Zusätzliche Eingreifvorsprünge sind denkbar, für die Funktion jedoch nicht zwingend erforderlich. Daher ist die Realisierung mittels zweier Eingreifelemente besonders effizient und einfach in der Herstellung.

Darauf aufbauend umfasst die Eingreifaufnahme des Messerrückens mit den Eingreifelementen korrespondierende Eingreiföffnungen. Dadurch wird der besondere Vorteil erreicht, dass zwischen Messerrücken und Messerkopf keine zusätzlichen Bauteile angeordnet werden müssen. Beispielsweise können die Eingreiföffnungen unmittelbar in den Messerrücken eingestanzt werden. Denkbar wäre hierbei eine Herstellung der Schneidmesser einschließlich der Klingenelemente und des Messerrückens als einstückig ausgebildete Klinge aus Flachstahl. Dieser Flachstahl ermöglicht sowohl das Ausstanzen der Klingenelemente als auch das Ausstanzen der Eingreiföffnungen. Insgesamt wird die Herstellung der Mähvorrichtung als auch deren Montage dadurch besonders effizient.

Um die Einsatzdauer der Mähmesservorrichtung zu erhöhen und den Verschleiss zu reduzieren, weist der Messerkopf erfindungsgemäss einen elastischen Abschnitt auf, welcher zwischen einem Verbindungsabschnitt des Messerkopfs mit dem Messerrücken und einem Anschluss zum Antrieb ausgebildet ist.

Im Betrieb der Mähmesservorrichtung kommt es beispielsweise durch Steine oder andere Gegenstände dazu, dass die Schneidmesser starken mechanischen Belastungen wie Schlägen oder Deformationen ausgesetzt sind. Ein steifer unflexibler Messerkopf als Verbindung zwischen Schneidmesser und seitlich angebundenem Antrieb belastet alle Bestandteile der Wirkungskette zumindest mechanisch. Dies erhöht zusätzlich den Verschleiss der gesamten Mähmesservorrichtung und verkürzt deren Lebensdauer deutlich. Der elastische Abschnitt des Messerkopfs kann hierbei insbesondere Schwingungen und Deformationen dämpfen, wodurch eine Entlastung der Mähmesservorrichtung bewirkt wird. Somit steigert der elastische Abschnitt die Einsatzdauer.

Nach einer besonders bevorzugten Ausführungsform ist der elastische Abschnitt aus einem Metall hergestellt. Metall hat eine geeignete Festigkeit und kann gleichzeitig die notwendige Elastizität aufweisen. Beispielsweise ist der elastische Abschnitt aus einem Federstahl hergestellt. Alternativ ist es jedoch ebenso denkbar, den elastischen Abschnitt aus einem Kunststoff oder einem anderen geeignete Material herzustellen.

Gemäss einer besonders bevorzugten Ausführungsform ist der elastische Abschnitt zum Dämpfen einer Bewegung in einer Ebene ausgebildet, welche parallel zu der durch die Klingenelemente des oberen Schneidmessers oder des unteren Schneidmessers definierten Ebene ausgebildet ist. Dadurch wird beispielsweise der technische Vorteil erreicht, dass mechanische Einflüsse, wie beispielsweise Schläge oder Vibrationen, welche im Betrieb von einer Vorderseite auf die Schneidmesser einwirken, reduziert und gedämpft werden können.

Nach einer weiteren Ausführungsform ist das obere Schneidmesser mittels einer oberen Haltevorrichtung mit einem Messerbalken verbunden ausgebildet, wobei die obere Haltevorrichtung mittels einer Führungsbuchse an dem Messerbalken gelagert ist. Innerhalb der Führungsbuchse ist eine vorgespannte Zugfeder zum Bewirken einer Anpresskraft des oberen Schneidmessers auf das untere Schneidmesser angeordnet.

Häufig werden die Schneidmesser durch Verunreinigungen, wie beispielsweise Steine, zwischen dem oberen Schneidmesser und dem unteren Schneidmesser stark deformiert. Diese Deformationen belasten die Schneidmesser zusätzlich und erhöhen den Verschleiss. Aufgrund der in der Führungsbuchse gelagerten Feder, kann die Haltevorrichtung translatorisch der Anpresskraft entgegengerichtet nachgeben, wodurch die Verunreinigungen selbstständig entfernt werden und dauerhafter Verschleiss an den Schneidmessern reduziert werden kann. Dies verlängert die Nutzungszeit der Mähmesservorrichtung, da der Verschleiss zusätzlich reduziert wird.

Mit anderen Worten ist die Feder dazu geeignet, mechanische Einflüsse, wie beispielsweise Schläge oder Vibrationen zu reduzieren, welche im Betrieb auf die Schneidmesser einwirken und orthogonal zu derjenigen Ebene orientiert sind, welche durch die Klingenelemente des oberen Schneidmessers oder des unteren Schneidmessers definiert wird.

Im Zusammenhang mit der vorstehenden Ausführungsform umfasst die Mähmesservorrichtung Dämpfungselemente, welche dazu ausgebildet sind, Belastungen in unterschiedlichen Richtungen zu dämpfen und damit den Verschleiss zu reduzieren.

Konkret ist der elastische Abschnitt des Messerkopfs dazu ausgebildet, mechanische Belastungen zu dämpfen, welche in einer Ebene auftreten, welche parallel zu derjenigen Ebene angeordnet ist, die durch die Klingenelemente des oberen Schneidmessers oder des unteren Schneidmessers definiert ist. Diese mechanischen Einflüsse entstehen beispielsweise durch Schläge oder Vibrationen, welche im Betrieb von einer Vorderseite auf die Schneidmesser einwirken.

In Kombination dazu ermöglicht die Zugfeder innerhalb der Führungsbuchse, dass mechanische Einflüsse, welche im Betrieb auf die Schneidmesser einwirken und orthogonal zu derjenigen Ebene orientiert sind, welche durch die Klingenelemente des oberen Schneidmessers oder des unteren Schneidmessers definiert wird, aufgenommen oder abgedämpft werden.

Somit umfasst die Mähmesservorrichtung eine insgesamt sehr verschleissarme Lösung mit hoher Einsatzdauer.

Nach einer bevorzugten Ausführungsform ist die Führungsbuchse in einer Gewindebuchse gehalten. Dadurch wird beispielsweise der technische Vorteil erreicht, dass die Gewindebuchse gegen Verunreinigungen geschützt angeordnet werden kann und eine geeignete Krafteinleitung von der Haltevorrichtung über die Führungsbuchse auf die Gewindebuchse erfolgen kann.

Gemäss einer weiteren Ausführungsform ist die Gewindebuchse über ein Aussengewinde mit dem Messerbalken verschraubbar ausgebildet. Dadurch wird der zusätzliche Vorteil erreicht, dass die Gewindebuchse eine zuverlässige Krafteinleitung in den Messerbalken sicherstellt. Des Weiteren ist es möglich, die Gewindebuchse ohne gesteigerten Montageaufwand zu demontieren oder zu wechseln. Zusätzlich kann mittels des Gewindes die absolute Position der Gewindebuchse relativ zum Messerbalken verändert werden. Dies kann beispielsweise nach einem Schneidmesserwechsel zur präzisen Einstellung der Mähmesservorrichtung vorteilhaft sein.

Nach einer weiteren vorteilhaften Ausführungsform ist die Zugfeder mittels einer Federschraube spannbar ausgebildet. Dadurch wird beispielsweise der technische Vorteil erreicht, dass die Spannung und somit die Zugkraft der Feder einstellbar ausgebildet ist. Insbesondere lässt sich die Spannung je nach Bedarf durch Betätigung der Federschraube erhöhen oder reduzieren. Beispielsweise kann dies nach einem Wechsel der Mähmesser vorteilhaft sein, um die optimale Einstellung der Mähmesservorrichtung sicherzustellen. Zudem ist es möglich, die Spannung der Zugfeder und damit die Anpresskraft des oberen Schneidmessers auf das untere Schneidmesser für einen bestimmten Einsatzzweck zu variieren.

Um die Anpresskraft des oberen Schneidmessers auf das untere Schneidmesser zu verändern, ist die Federschraube über einen Buchsendeckel von außen einstellbar ausgebildet. Der Buchsendeckel ist besonders einfach zu betätigen. Ein spezielles Werkzeug ist nicht zwingend notwendig. Beispielsweise kann der Buchsendeckel manuell oder mittels eines einfachen handelsüblichen Werkzeugs betätigt werden. Insbesondere sind ein Schraubenzieher, ein Inbusschlüssel, ein Ring- oder Maulschlüssel hierfür geeignet.

Nach einer zusätzlichen Ausführungsform ist das obere Schneidmesser einschließlich den Klingenelementen und dem Messerrücken als einstückig ausgebildete Klinge, insbesondere aus einem Flachstahl gefertigt, ausgebildet. Die Ausbildung aus einem Flachstahl ist hierbei besonders preiswert in der Herstellung. Zusätzlich ist die Ausbildung aus Flachstahl mit Gewichtseinsparungen verbunden, welche sich wiederum verschleissreduzierend und damit positiv auf die Lebensdauer der Mähmesservorrichtung auswirken. Zusätzlich oder alternativ kann auch das untere Schneidmesser einschließlich den Klingenelementen und dem Messerrücken als einstückig ausgebildete Klinge, insbesondere aus einem Flachstahl gefertigt, ausgebildet sein.

Ein besonderer Vorteil ergibt sich aus der Reduzierung der Dicke des oberen Schneidmessers und des unteren Schneidmessers, welche mit der einstückigen Ausbildung der Klinge verbunden sind. Die reduzierte Dicke der Schneidmesser verbessert das Abgleiten von Schnittgut im Betrieb der Mähmesservorrichtung, da sämtliche Kanten durch Materialaufdickung des Messerrückens, wie sie beispielsweise durch angenietete oder aufgeschweisste Klingenelemente entstehen, eliminiert werden.

Gemäss einer weiteren Ausführungsform umfasst jedes Klingenelement zwei V-förmig ausgebildete Schneidkanten, wobei sich die Schneidkante eines ersten Klingenelements und die gegenüberliegende Schneidkante eines benachbarten Klingenelements kontinuierlich über den Messerrücken erstrecken. Mit anderen Worten sind die Schneidkanten durchgehend ausgebildet und es gibt keine Totkanten mehr. Dies erhöht die Effizienz der Mähmesservorrichtung erheblich. Insbesondere ist diese Ausführungsform im Zusammenhang mit derjenigen Ausbildung vorteilhaft, nach welcher die Klingenelemente und der Messerrücken als einstückig ausgebildete Klinge, insbesondere aus einem Flachstahl gefertigt, ausgebildet sind. Durch die besonders flache Ausführung der einstückigen Klinge können die kontinuierlich ausgebildeten Schneidkanten besonders leicht vollständig geschliffen und geschärft werden.

Gewöhnlich ist eine Vielzahl an Schneidmessern seriell entlang des Messerbalkens angeordnet, wobei meist jedem oberen Schneidmesser ein unteres Schneidmesser zugeordnet ist. Nach einer besonderen Ausführungsform sind entlang des Messerbalkens eine Vielzahl oberer Schneidmesser und unterer Schneidmesser angeordnet, wobei jedem dritten oberen Schneidmesser eine obere Haltevorrichtung zugeordnet ist. Dadurch wird beispielsweise der technische Vorteil erreicht, dass eine kontinuierliche Kraftverteilung auf alle Schneidmesser entlang des Messerbalkens sichergestellt werden kann. Dadurch wird der Verschleiss reduziert und die Einsatzdauer der erfindungsgemässen Vorrichtung zusätzlich erhöht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: ein oberes Schneidmesser mit Messerkopf;
- Fig. 2: ein Doppelmesser-Schneidsystem mit Antrieb und oberer Haltevorrichtung;
- Fig. 3: eine Schnittdarstellung eines oberen Schneidmessers auf Höhe einer oberen Haltevorrichtung;
- Fig. 4: eine Schnittdarstellung eines unteren Schneidmessers auf Höhe einer unteren Haltevorrichtung; und
- Fig. 5: eine schematische Darstellung eines oberen Schneidmessers mit Messerkopf.

Grundsätzlich sind in den Figuren gleiche Teile mit gleichen Bezugszeichen versehen.

### Wege zur Ausführung der Erfindung

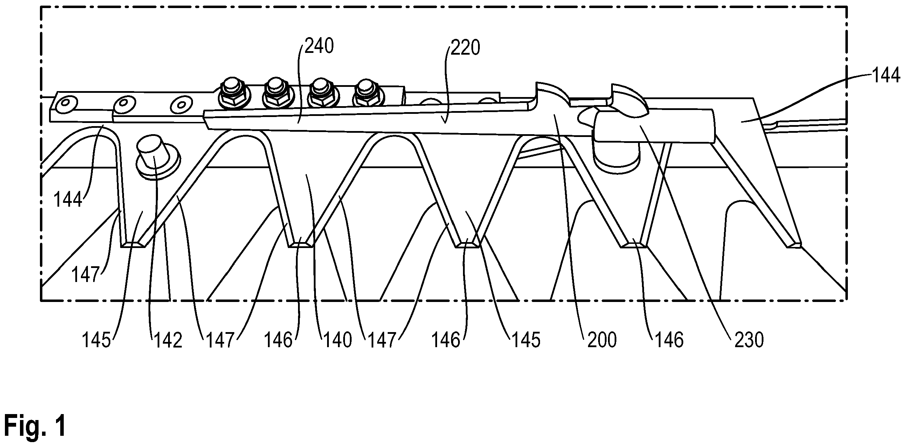

Die Figur 1 zeigt ein oberes Schneidmesser 140 mit Messerkopf 200. Das obere Schneidmesser 140 ist Bestandteil der Mähmesservorrichtung (nicht gezeigt), welche ein Doppelmesser-Schneidsystem (nicht gezeigt) mit dem oberen Schneidmesser 140 und einem unteren Schneidmesser (nicht gezeigt) umfasst. Das obere Schneidmesser 140 und das untere Schneidmesser 180 werden mittels eines Antriebs 114 relativ zueinander bewegt. Sowohl das obere Schneidmesser 140 als auch das untere Schneidmesser 180 haben jeweils mehrere Klingenelemente 145, die über einen Messerrücken 144, 184 miteinander verbunden ausgebildet sind. Somit sind die Klingenelemente 145 und der Messerrücken 144, 184 als gemeinsames integrales Bauteil ausgebildet. Beispielsweise werden Sie aus einem Flachstahl ausgestanzt, wodurch die Herstellung sehr preiswert ist. Zusätzlich umfasst die Mähmesservorrichtung 100 einen auswechselbaren Messerkopf 200, um eine Antriebsbewegung von einem seitlichen Antrieb (nicht gezeigt) auf das Doppelmesser-Schneidsystem 111 zu übertragen. Der Messerkopf 200 hat einen elastischen Abschnitt 220, welcher zwischen einem Verbindungsabschnitt 240 des Messerkopfs 200 mit dem oberen Schneidmesser 140 und einem Anschluss 230 zur Verbinden mit einem Antrieb ausgebildet ist.

Der gesamte Messerkopf 200 mit Verbindungsabschnitt 240, elastischem Abschnitt 200 und Anschluss 230 ist aus einem Stück gefertigt. Beispielsweise kann auch der Messerkopf aus einem Flachstahl hergestellt werden, wodurch auch der elastische Abschnitt 220 aus Metall hergestellt ist. Der elastische Abschnitt 220 kann insbesondere eine Dämpfungsfunktion in einer Ebene realisieren, welche parallel zu der durch die Klingenelemente 145 des oberen Schneidmessers 140 definierten Ebene ausgebildet ist.

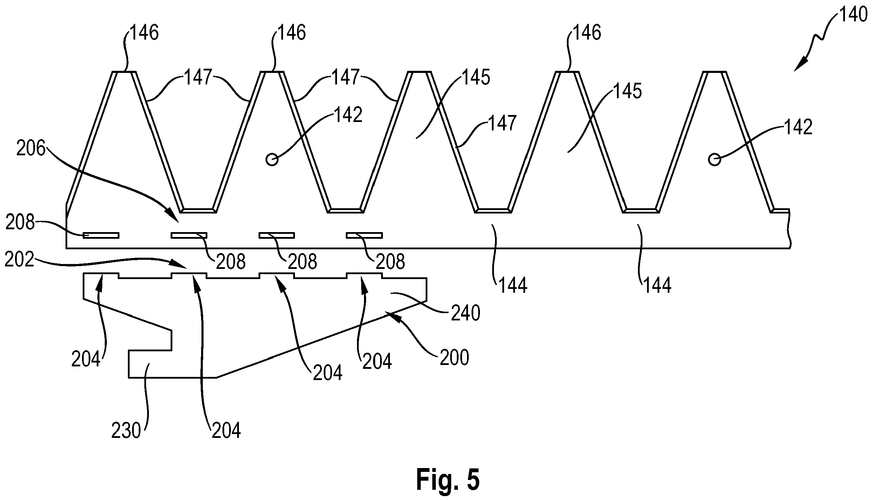

Der Verbindungsabschnitt 240 ist in der dargestellten Ausführungsform mittels Schrauben und Nieten an dem oberen Schneidmesser 140 fixiert. Zusätzlich umfasst der Verbindungsabschnitt 240 des Messerkopfs 200 ein Eingreifelement (nicht gezeigt), welches zum Eingreifen in eine korrespondierende Eingreifaufnahme (nicht gezeigt) im Messerrücken 144 des oberen Schneidmessers (140) vorgesehen ist. In der Beschreibung zu der Figur 5 wird hierzu detailliert eingegangen.

Wie bereits beschrieben, umfassen sowohl das obere Schneidmesser 140 als auch das untere Schneidmesser 180 jeweils mehrere Klingenelemente 145, die über den Messerrücken 144, 184 miteinander verbunden und als gemeinsames integrales Bauteil ausgebildet sind. Hierbei hat jedes Klingenelement 145 zwei V-förmig ausgebildete Schneidkanten 147. An einer Vorderseite jedes Klingenelements 145 ist die Schneidkante 147 durch eine abgeflachte Schneidmesserspitze 146 unterbrochen.

Die Schneidkante 147 eines ersten Klingenelements 145 und die gegenüberliegende Schneidkante 147 eines benachbarten Klingenelements 145 erstrecken sich kontinuierlich über den Messerrücken 144, 184, wodurch die Schneidkante 147 über den Messerrücken 144 durchgehend ausgebildet ist.

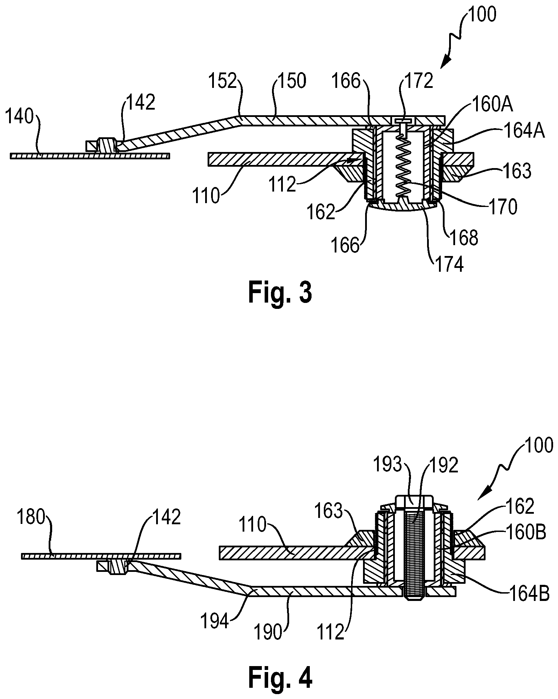

Auf einer Oberseite eines Klingenelements 145 befindet sich ein Schneidmesserlager 142 in Form eines Zapfens. Das Schneidmesserlager 142 dient der Verbindung des oberen Schneidmessers 140 mit einer oberen Haltevorrichtung 150. Die Funktion der oberen Haltevorrichtung 150 wird in der Figur 3 detailliert erläutert.

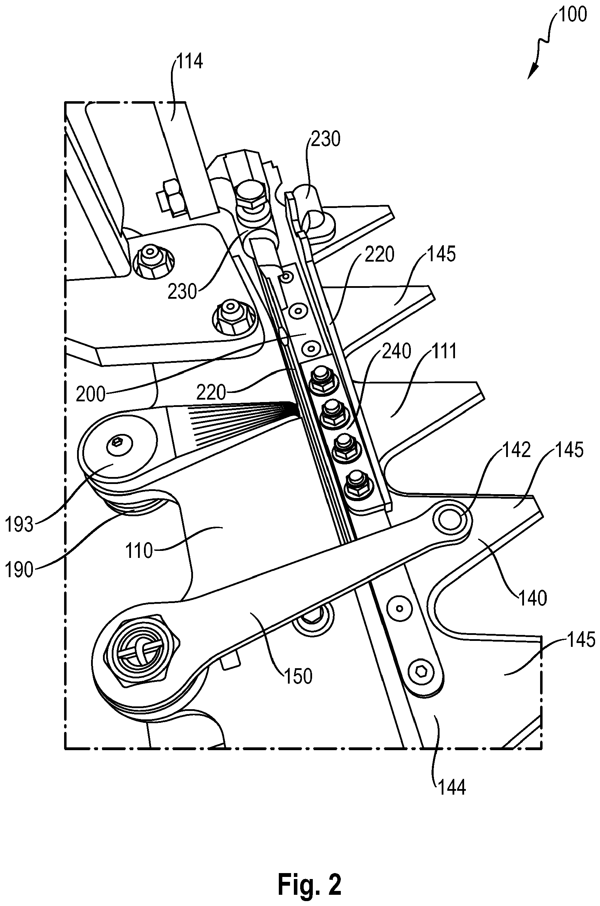

Die Figur 2 zeigt ein Doppelmesser-Schneidsystem 111 mit Antrieb 114 und oberer Haltevorrichtung 150. Die Mähmesservorrichtung 100 umfasst einen Messerbalken 110, welcher ein Doppelmesser-Schneidsystem 111 trägt. Das Doppelmesser-Schneidsystem 111 umfasst das obere Schneidmesser 140 und das untere Schneidmesser 180 (nicht gezeigt). Im Betrieb werden das obere Schneidmesser 140 und das untere Schneidmesser 180 mittels eines Antriebs 114, beispielsweise ein einseitig ausgebildeter Kurbelwellenantrieb, relativ zueinander bewegt.

Das obere Schneidmesser 140 ist mittels einer oberen Haltevorrichtung 150 mit dem Messerbalken 110 verbunden. Die obere Haltevorrichtung 150 ist an dem Messerbalken 110 gelagert. Eine Führungsbuchse (nicht gezeigt) lässt die notwendige Beweglichkeit der oberen Haltevorrichtung 150 gegenüber dem Messerbalken 110 zu, die während des Betriebs der Mähmesservorrichtung 100 durch die Relativbewegung des Doppelmesser-Schneidsystems 111 auftritt.

Neben der oberen Haltevorrichtungen 150 befindet sich eine untere Haltevorrichtung 190 mit einem leicht zugänglichen Schraubenkopf 193, welcher mit einer Schraube 192 (nicht gezeigt) verbunden ist. Die Schraube 192 dient dem Fixieren der unteren Haltevorrichtung 190 an dem Messerbalken 110. Die untere Haltevorrichtung 190 verbindet das untere Schneidmesser 180 mit dem Messerbalken 110.

Sowohl das obere Schneidmesser 140 als auch das untere Schneidmesser 180 sind jeweils über einen auswechselbaren Messerkopf 200 mit dem Antrieb 114 verbunden.

Jeder der beiden Messerköpfe 200, also der Messerkopf 200 des oberen Schneidmessers 140 und der Messerkopf 200 des unteren Schneidmessers 180, hat einen elastischen Abschnitt 220, welcher zwischen einem Verbindungsabschnitt 240 des Messerkopfs 200 mit dem Schneidmesser 140, 180 und einem Anschluss 230 zur Verbindung mit dem Antrieb 114 angeordnet ist.

Die Figur 3 zeigt eine erfindungsgemässe Mähmesservorrichtung 100 in einer Schnittansicht auf Höhe der oberen Haltevorrichtung 150 nach einer beispielhaften Ausführungsform. Die Mähmesservorrichtung 100 umfasst den Messerbalken 110 und das Doppelmesser-Schneidsystem 111, wobei das Doppelmesser-Schneidsystem 111 das obere Schneidmesser 140 und das untere Schneidmesser 180 (nicht gezeigt) umfasst. Das obere Schneidmesser 140 ist mittels der oberen Haltevorrichtung 150 mit dem Messerbalken 110 verbunden.

Die obere Haltevorrichtung 150 ist hierbei über eine Führungsbuchse 160A an dem Messerbalken 110 gelagert. Die Führungsbuchse selbst ist in einer Gewindebuchse 164A angeordnet, welche wiederum über ein Aussengewinde 162 mit dem Messerbalken 110 verschraubbar ausgebildet ist. Zum Verschrauben der Gewindebuchse 160A wird diese durch die Aufnahme 112 im Messerbalken 110 hindurch geführt. Durch eine Kontermutter 163 ist die Verschraubung der Gewindebuchse 164A zusätzlich abgesichert. Innerhalb der Gewindebuchse 164A befindet sich ein Lager 166, welches die Führungsbuchse 160A nahezu reibungsarm sowohl für eine rotatorische als auch für eine translatorische Bewegung gegenüber der Gewindebuchse 164A lagert. Das Lager 166 ist sowohl an der Oberseite als auch der Unterseite der Gewindebuchse 164A ausgebildet, wodurch verschiedene Lagerfunktionen realisierbar sind. Die rotatorische Lagerungskomponente, welche aufgrund der Bewegung der oberen und der unteren Schneidmesser 140, 180 zueinander erzeugt wird, lässt sich beispielsweise durch den Einsatz eines ringförmigen Wälzlagers aufnehmen. Die translatorische Bewegungskomponente beansprucht die Führungsbuchse 160A in Längsrichtung, weshalb das Anordnen eines Gleitlagers vorteilhaft ist. Ideal ist ein Lager, welches sowohl die rotatorische Belastung als auch die Belastung in Längsrichtung der Führungsbuchse aufnehmen kann. Die Lagerung reduziert den Verschleiss der Mähmesservorrichtung 100 zusätzlich und steigert somit die Lebensdauer der Mähmesservorrichtung insgesamt.

Innerhalb der Führungsbuchse 160A befindet sich eine vorgespannte Zugfeder 170. Die Zugfeder 170 ist am ersten Ende über eine Federschraube 172 mit der oberen Haltevorrichtung 150 verbunden. Die Zugfeder 170 erstreckt sich durch die Führungsbuchse 160A hindurch und ist an ihrem zweiten Ende mit einem Buchsendeckel 174 verbunden. Der Buchsendeckel 174 weist gegenüber der Gewindebuchse 164A einen radialen Überstand 168 auf, wodurch die Zugfeder 170 einerseits unter Zugspannung gesetzt werden kann und andererseits über den Buchsendeckel 174 von außen einstellbar ist.

Durch die Zugspannung der Zugfeder 170 wird die obere Haltevorrichtung 150 an den Messerbalken 110 gezogen. Durch das Anziehen der oberen Haltevorrichtung 150 an den Messerbalken 110 wird eine Anpresskraft des oberen Schneidmessers 140 auf das untere Schneidmesser 180 (nicht gezeigt) bewirkt. Die Führungsbuchse 160A stellt über ihre Lager 166 innerhalb der Gewindebuchse 164A sicher, dass die Zugfeder 170 ausschliesslich auf Zug beansprucht werden kann. Dadurch wird die Anpresskraft des oberen Schneidmessers 140 auf das untere Schneidmesser 180 nicht durch eine Kippbewegung der oberen Haltevorrichtung 150 erzeugt, sondern durch eine reine Zugbewegung der oberen Haltevorrichtung 150 übertragen. Die Wirkrichtung der Anpresskraft auf das obere Schneidmesser 140 wirkt somit parallel zur Längsrichtung der Führungsbuchse 160A.

Die obere Haltevorrichtung 150 weist zudem eine Kröpfung 152 auf. Die Kröpfung 152 ist zwischen Führungsbuchse 160A und dem oberem Schneidmesser 140 angeordnet, wodurch die Anpresskraft der Zugfeder 170 optimal vom oberen Schneidmesser 140 zum unteren Schneidmesser 180 übertragen werden kann. Die Kröpfung 152 kompensiert somit die räumliche Ausdehnung der Zugfeder 170, welche durch die Orientierung der Führungsbuchse 160A orthogonal zum Messerbalken angeordnet ist. Das obere Schneidmesser 140 ist in dem Schneidmesserlager 142 der oberen Haltevorrichtung 150 geführt.

Die Figur 4 zeigt eine erfindungsgemässe Mähmesservorrichtung 100 in einer Schnittansicht auf Höhe der unteren Haltevorrichtung 190 nach einer beispielhaften Ausführungsform. Im Unterschied zur oberen Haltevorrichtung 150 ist die untere Haltevorrichtung 190 ohne Federelement fest mit dem Messerbalken 110 verbunden. Dies hat insbesondere den Zweck, dass die bereits beschriebene, durch die Zugfeder 170 erzeugte, Anpresskraft des oberen Schneidmessers 140 auf das untere Schneidmesser 180 aufgenommen werden kann.

Die untere Haltevorrichtung 190 ist mittels einer Führungsbuchse 160B an dem Messerbalken 110 fixiert. Die Führungsbuchse 160B liegt hierbei innerhalb einer Gewindebuchse 164B, welche über ein Aussengewinde 162 mit dem Messerbalken 110 verschraubt ist. Zum Verschrauben der Gewindebuchse 160B wird diese durch die Aufnahme 112 im Messerbalken 110 hindurch geführt. Eine zusätzliche Kontermutter 163 sichert die eingeschraubte Gewindebuchse 164B an dem Messerbalken 110 zusätzlich ab. Die Gewindebuchse 164B kann somit ohne gesteigerten Montageaufwand demontiert oder gewechselt werden. Zusätzlich kann mittels des Gewindes der Gewindebuchse 164B die absolute Position der Gewindebuchse 164B relativ zum Messerbalken 110 verändert werden. Dies ermöglicht eine präzise Einstellung der unteren Haltevorrichtung 190 in Abstimmung mit der oberen Haltevorrichtung 150.

Zusätzlich weist die untere Haltevorrichtung 190 eine Schraube 192 auf, welche sich vollständig durch die Führungsbuchse 164B hindurch erstreckt und die untere Haltevorrichtung 190 an dem Messerbalken 110 fixiert. Die Schraube 192 verfügt über einen leicht zugänglichen Schraubenkopf 193, über welchen die Fixierung oder das Lösen der unteren Haltevorrichtung 190 mit dem Messerbalken 110 einfach erfolgen kann. Zusätzlich wird durch das Hindurchführen der Schraube 192 durch die vollständige Führungsbuchse 164B hindurch, eine symmetrische Krafteinleitung realisiert.

Des Weiteren weist die untere Haltevorrichtung 190 eine Kröpfung 194 auf. Die Kröpfung 194 ist zwischen Führungsbuchse 160B und dem unteren Schneidmesser 180 angeordnet. Das untere Schneidmesser 180 ist in einem Schneidmesserlager 142 der unteren Haltevorrichtung 190 geführt.

Die Figur 5 zeigt eine schematische Darstellung eines oberen Schneidmessers 140 mit Messerkopf 200. Das obere Schneidmesser 140 umfasst mehrere Klingenelemente 145, die über den Messerrücken 144 miteinander verbunden ausgebildet sind. Die Klingenelemente 145 und der Messerrücken 144 bilden somit ein gemeinsames integrales Bauteil, welches beispielsweise aus einem Flachstahl ausgestanzt hergestellt ist. Zusätzlich ist der auswechselbare Messerkopf 200 gezeigt, welcher die Antriebsbewegung eines seitlichen Antriebs (nicht gezeigt) auf das obere Schneidmesser 140 überträgt. Der Messerkopf 200 hat ein Eingreifelement 202, welches zum Eingreifen in eine korrespondierende Eingreifaufnahme 206 im Messerrücken 200 des oberen Schneidmessers 140 ausgebildet ist. Das Eingreifelement 202 des Messerkopfes 200 umfasst insgesamt vier Eingreifvorsprünge 204, welche mit insgesamt vier Eingreiföffnungen 208 korrespondieren, die in den Messerrücken 200 des oberen Schneidmessers eingebracht sind.

Jedes Klingenelement 145 hat zwei V-förmig ausgebildete Schneidkanten 147. Die Schneidkanten 147 sind an jeder Schneidmesserspitze 146 unterbrochen, während sich die Schneidkanten 147 zweier benachbarter Klingenelemente 145 kontinuierlich über den Messerrücken 144 erstrecken. Jedes dritte Klingenelement 145 des oberen Schneidmessers 140 hat ein Schneidmesserlager 142, welches zum Anordnen der oberen Haltevorrichtung 150 ausgebildet ist.

Sowohl das obere Schneidmesser 140, der Messerkopf 200 als auch das untere Schneidmesser 180 (nicht gezeigt) können aus Flachstahl hergestellt werden, wobei sämtliche Öffnungen und Konturen ausgestanzt werden können.

## Patentansprüche

1. Mähmesservorrichtung (100) mit:
einem Doppelmesser-Schneidsystem (111), wobei das Doppelmesser-Schneidsystem (111) ein oberes Schneidmesser (140) und ein unteres Schneidmesser (180) umfasst, welche mittels eines einseitigen Antriebs (114) relativ zueinander bewegbar ausgebildet sind, wobei
zumindest das obere Schneidmesser (140) oder das untere Schneidmesser (180) jeweils mehrere Klingenelemente (145) umfasst, die über einen Messerrücken (144, 184) miteinander verbunden ausgebildet sind, und wobei die Klingenelemente (145) und der Messerrücken (144, 184) als gemeinsames integrales Bauteil ausgebildet sind, wobei
die Mähmesservorrichtung (100) einen auswechselbaren Messerkopf (200) zum Einleiten einer Antriebsbewegung eines seitlichen Antriebs (144) auf das Doppelmesser-Schneidsystem (111) aufweist, wobei der Messerkopf (200) einen elastischen Abschnitt (220) umfasst, welcher zwischen einem Verbindungsabschnitt (240) des Messerkopfs (200) mit dem Messerrücken (144, 184) und einem Anschluss (230) zum Antrieb (114) ausgebildet ist.

2. Mähmesservorrichtung (100) gemäss Anspruch 1, **dadurch gekennzeichnet, dass** der Messerkopf (200) ein Eingreifelement (202) aufweist, welches zum Eingreifen in eine korrespondierende Eingreifaufnahme (206) im Messerrücken (144, 184) des oberen Schneidmessers (140) oder des unteren Schneidmessers (180) ausgebildet ist.

3. Mähmesservorrichtung (100) gemäss Anspruch 1 oder 2, **dadurch gekennzeichnet, dass** das Eingreifelement (202) zumindest zwei Eingreifvorsprünge (204) umfasst.

4. Mähmesservorrichtung (100) gemäss Anspruch 3, **dadurch gekennzeichnet, dass** die Eingreifaufnahme (206) des Messerrückens (144, 184) mit den Eingreifelementen (202) korrespondierende Eingreiföffnungen (208) umfasst.

5. Mähmesservorrichtung (100) gemäss einem der vorstehenden Ansprüche, **dadurch gekennzeichnet, dass** der elastische Abschnitt (220) aus einem Metall hergestellt ist.

6. Mähmesservorrichtung (100) gemäss einem der vorstehenden Ansprüche, **dadurch gekennzeichnet, dass** der elastische Abschnitt (220) zum Dämpfen einer Bewegung in einer Ebene ausgebildet ist, welche parallel zu der durch die Klingenelemente (145) des oberen Schneidmessers (140) oder des unteren Schneidmessers (180) definierten Ebene ausgebildet ist.

7. Mähmesservorrichtung (100) gemäss einem der vorstehenden Ansprüche, **dadurch gekennzeichnet, dass** das obere Schneidmesser (140) mittels einer oberen Haltevorrichtung (150) mit einem Messerbalken (110) verbunden ausgebildet ist, wobei
die obere Haltevorrichtung (150) mittels einer Führungsbuchse (160) an dem Messerbalken (110) gelagert und innerhalb der Führungsbuchse (160A) eine vorgespannte Zugfeder (170) zum Bewirken einer Anpresskraft des oberen Schneidmessers (140) auf das untere Schneidmesser (180) angeordnet ist.

8. Mähmesservorrichtung (100) nach Anspruch 7, **dadurch gekennzeichnet, dass** die Führungsbuchse (160A) in einer Gewindebuchse (164A) gehalten ist.

9. Mähmesservorrichtung (100) nach Anspruch 8, **dadurch gekennzeichnet, dass** die Gewindebuchse (164A) über ein Aussengewinde (162) mit dem Messerbalken (110) verschraubbar ausgebildet ist.

10. Mähmesservorrichtung (100) nach einem der Ansprüche 7 bis 9, **dadurch gekennzeichnet, dass** die Zugfeder (170) mittels einer Federschraube (172) spannbar ausgebildet ist.

11. Mähmesservorrichtung (100) nach Anspruch 10, **dadurch gekennzeichnet, dass** die Federschraube (172) über einen Buchsendeckel (174) von außen einstellbar ausgebildet ist.

12. Mähmesservorrichtung (100) gemäss einem der vorstehenden Ansprüche, **dadurch gekennzeichnet, dass** das obere Schneidmesser (140) einschließlich den Klingenelementen (145) und dem oberen Messerrücken (144) als einstückig ausgebildete Klinge, insbesondere aus einem Flachstahl gefertigt, ausgebildet ist.

13. Mähmesservorrichtung (100) gemäss einem der vorstehenden Ansprüche, **dadurch gekennzeichnet, dass** jedes Klingenelement (145) zwei V-förmig ausgebildete Schneidkanten (147) umfasst, wobei sich die Schneidkante (147) eines ersten Klingenelements (145) und die gegenüberliegende Schneidkante (147) eines benachbarten Klingenelements (145) kontinuierlich über den Messerrücken (144, 184) erstreckt.

14. Mähmesservorrichtung (100) nach einem der Ansprüche 7 bis 13, **dadurch gekennzeichnet, dass** jedem dritten Klingenelement (145) des oberen Schneidmessers (140) eine obere Haltevorrichtung (150) zugeordnet ist.

## Claims

1. Mowing knife device (100) with
a double knife cutting system (111), wherein the double knife cutting system (111) comprises an upper cutting knife (140) and a lower cutting knife (180) which are configured to be movable relative to each other via a single-sided drive (114), wherein
at least the upper cutting knife (140) or the lower cutting knife (180) each comprises a plurality of blade elements (145) which are connected to one another via a knife back (144, 184), and wherein the blade elements (145) and the knife back (144, 184) are configured as a common integral component, wherein
the mowing knife device (100) comprises a replaceable knife head (200) for initiating a driving movement of a lateral drive (144) on the double knife cutting system (111), wherein the knife head (200) comprises a resilient portion (220) formed between a connecting portion (240) of the knife head (200) with the knife back (144, 184) and a coupling (230) to the drive (114).

2. Mowing knife device (100) according to claim 1, **characterised in that** the knife head (200) comprises an engagement element (202) configured to engage a corresponding engagement receptacle (206) in the knife back (144, 184) of the upper cutting knife (140) or the lower cutting knife (180).

3. Mowing knife device (100) according to claim 1 or claim 2, **characterised in that** the engagement element (202) comprises at least two engagement projections (204).

4. Mowing knife device (100) according to claim 3, **characterised in that** the engagement receptacle (206) of the knife back (144, 184) comprises engagement openings (208) corresponding to the engagement elements (202).

5. Mowing knife device (100) according to one of the preceding claims, **characterised in that** the resilient portion (220) is made of a metal.

6. Mowing knife device (100) according to one of the preceding claims, **characterised in that** the resilient portion (220) is configured to dampen movement in a plane which is parallel to a plane defined by the blade elements (145) of the upper cutting knife (140) or the lower cutting knife (180).

7. Mowing knife device (100) according to one of the preceding claims, **characterised in that** the upper cutting knife (140) is connected to a knife bar (110) via an upper holding device (150), wherein
the upper holding device (150) is mounted on the knife bar (110) via a guide bush (160) and a preloaded tension spring (170) is arranged within the guide bush (160A) for causing a contact force of the upper cutting knife (140) on the lower cutting knife (180).

8. Mowing knife device (100) according to claim 7, **characterised in that** the guide bush (160A) is held in a threaded bush (164A).

9. Mowing knife device (100) according to claim 8, **characterised in that** the threaded bush (164A) is configured to be screwed to the knife bar (110) via an external thread (162).

10. Mowing knife device (100) according to one of the claims 7 to 9, **characterised in that** the tension spring (170) is configured to be tensionable via a spring screw (172).

11. Mowing knife device (100) according to claim 10, **characterised in that** the spring screw (172) is configured to be adjustable from the outside via a bushing cover (174).

12. Mowing knife device (100) according to one of the preceding claims, **characterised in that** the upper cutting knife (140) including the blade elements (145) and the upper knife back (144) is formed as an integral blade, in particular made of a flat steel.

13. Mowing knife device (100) according to one of the preceding claims, **characterised in that** each blade element (145) comprises two V-shaped cutting edges (147), wherein the cutting edge (147) of a first blade element (145) and the opposite cutting edge (147) of an adjacent blade element (145) extend continuously across the knife back (144, 184).

14. Mowing knife device (100) according to one of the claims 7 to 13, **characterised in that** an upper holding device (150) is associated with each third blade element (145) of the upper cutting knife (140).

## Revendications

1. Dispositif à couteaux de fauchage (100) comprenant :
un système de coupe à double couteau (111), le système de coupe à double couteau (111) comprenant un couteau de coupe supérieur (140) et un couteau de coupe inférieur (180), lesquels sont conçus pour être mobiles l'un par rapport à l'autre au moyen d'un entraînement unilatéral (114),
au moins le couteau de coupe supérieur (140) ou le couteau de coupe inférieur (180) comprenant respectivement une pluralité d'éléments de lame (145) qui sont reliés les uns aux autres par le biais d'un dos de couteau (144, 184), et les éléments de lame (145) et le dos de couteau (144, 184) étant conçus comme un composant intégral commun,
le dispositif à couteau de fauchage (100) comportant une tête de couteau interchangeable (200) destinée à amorcer un mouvement d'entraînement d'un entraînement latéral (144) sur le système de coupe à double couteau (111), la tête de couteau (200) comprenant une portion élastique (220) qui est formée entre une portion de liaison (240) de la tête de couteau (200) au dos de coupe (144, 184) et un raccordement (230) à l'entraînement (114).

2. Dispositif à couteaux de fauchage (100) selon la revendication 1, **caractérisé en ce que** la tête de couteau (200) comporte un élément d'engagement (202) qui est conçu pour s'engager dans un logement d'engagement correspondant (206) ménagé dans le dos de couteau (144, 184) du couteau de coupe supérieur (140) ou du couteau de coupe inférieur (180).

3. Dispositif à couteaux de fauchage (100) selon la revendication 1 ou 2, **caractérisé en ce que** l'élément d'engagement (202) comprend au moins deux saillies d'engagement (204).

4. Dispositif à couteaux de fauchage (100) selon la revendication 3, **caractérisé en ce que** le logement d'engagement (206) du dos de couteau (144, 184) comprend des ouvertures d'engagement (208) correspondant aux éléments d'engagement (202).

5. Dispositif à couteaux de fauchage (100) selon l'une des revendications précédentes, **caractérisé en ce que** la partie élastique (220) est réalisée à partir d'un métal.

6. Dispositif à couteaux de fauchage (100) selon l'une des revendications précédentes, **caractérisé en ce que** la portion élastique (220) est conçue pour amortir un mouvement dans un plan qui est parallèle au plan défini par les éléments de lame (145) du couteau de coupe supérieur (140) ou du couteau de coupe inférieur (180).

7. Dispositif à couteaux de fauchage (100) selon l'une des revendications précédentes, **caractérisé en ce que** le couteau de coupe supérieur (140) est conçu pour être relié à une barre à couteaux (110) au moyen d'un dispositif de retenue supérieur (150),
le dispositif de retenue supérieur (150) étant monté sur la barre à couteaux (110) au moyen d'une douille de guidage (160) et un ressort de traction précontraint (170) étant disposé à l'intérieur de la douille de guidage (160A) pour exercer une force de pression du couteau de coupe supérieur (140) sur le couteau de coupe inférieur (180).

8. Dispositif à couteaux de fauchage (100) selon la revendication 7, **caractérisé en ce que** la douille de guidage (160A) est maintenue dans une douille filetée (164A) .

9. Dispositif à couteaux de fauchage (100) selon la revendication 8, **caractérisé en ce que** la douille filetée (164A) est conçue pour pouvoir être vissée sur la barre à couteaux (110) par le biais d'un filetage extérieur (162) .

10. Dispositif à couteaux de fauchage (100) selon l'une des revendications 7 à 9, **caractérisé en ce que** le ressort de traction (170) est destiné à être tendu au moyen d'une vis à ressort (172).

11. Dispositif à couteaux de fauchage (100) selon la revendication 10, **caractérisé en ce que** la vis à ressort (172) est conçue pour être réglable de l'extérieur par le biais d'un couvercle de douille (174).

12. Dispositif à couteaux de fauchage (100) selon l'une des revendications précédentes, **caractérisé en ce que** le couteau de coupe supérieur (140), incluant les éléments de lame (145) et le dos de couteau supérieur (144), est conçu sous la forme d'une lame monobloc, notamment en acier plat.

13. Dispositif à couteaux de fauchage (100) selon l'une des revendications précédentes, **caractérisé en ce que** chaque élément de lame (145) comprend deux arêtes de coupe (147) en forme de V, l'arête de coupe (147) d'un premier élément de lame (145) et l'arête de coupe opposée (147) d'un élément de lame adjacent (145) s'étendant en continu sur le dos de couteau (144, 184).

14. Dispositif à couteaux de fauchage (100) selon l'une des revendications 7 à 13, **caractérisé en ce qu'**un dispositif de retenu supérieur (150) est associé à un élément de lame (145) sur trois du couteau de coupe supérieur (140).
